# EUROPÄISCHE PATENTSCHRIFT

(11) **EP 1 203 103 B1**
(45) Veröffentlichungstag und Bekanntmachung des Hinweises auf die Patenterteilung: **11.12.2002**
(21) Anmeldenummer: 00929359.8
(22) Anmeldetag: 14.04.2000
(51) Int. Cl.: C21C 5/52, C21C 5/54

(54) **VERFAHREN ZUR HERSTELLUNG VON SCHAUMSCHLACKE**
METHOD OF PRODUCING FOAMED SLAG
PROCEDE DE PREPARATION DE LAITIER EXPANSE

(30) Priorität: 02.06.1999 DE 19925144
(43) Veröffentlichungstag der Anmeldung: 08.05.2002
(73) Patentinhaber: Sachtleben Chemie GmbH, 47198 Duisburg (DE); GSR Gesellschaft für Synthetische Rohstoffe, 47441 Moers (DE)
(72) Erfinder: AMIRZADEH-ASL, Djamschid, D-47441 Moers (DE); FÜNDERS, Dieter, D-47187 Duisburg (DE)
(74) Vertreter: Uppena, Franz, Dr.
(86) Internationale Anmeldenummer: EP0003391
(87) Internationale Veröffentlichungsnummer: WO00075439

(56) Entgegenhaltungen:
- DE-C- 4 419 816
- US-A- 4 528 035
- JUNG SUNG-MO ET AL: "Foaming characteristics of BOF slags" ISIJ INT;ISIJ INTERNATIONAL 2000 IRON & STEEL INST OF JAPAN, JAPAN, Bd. 40, Nr. 4, 2000, Seiten 348-355, XP000900964

## Beschreibung

Die Erfindung betrifft ein Verfahren zur Herstellung von Schaumschlacke in einem Lichtbogenofen durch dosiertes Einblasen eines Kohlenstoffträgers mittels eines Sauerstoffträgers in die zwischen der Schlackenschicht und der Metallschmelze bestehende Grenzschicht und/oder in die an die Grenzschicht angrenzenden Zonen der Schlackenschicht und/oder Metallschmelze in einer Menge, daß wenigstens teilweise die Lichtbögen durch eine Schaumschlackeschicht eingehüllt sind.

Der Lichtbogenofen, der zum Schmelzen von Metallen und zur Erzeugung von qualitativ hochwertigen Stählen eingesetzt wird, benutzt die Wärmewirkung eines Lichtbogens zwischen mehreren Graphitelektroden entweder indirekt, indem das Schmelzgut nur durch Strahlung des Lichtbogens erhitzt wird, oder indem das Schmelzgut selbst als Elektrode des Lichtbogens wirkt. Neben dem Lichtbogen wird ein weiterer Engerieanteil durch das Einblasen von feinteiligen Kohlenstoffträgern zusammen mit Sauerstoffträgern in die Metallschmelze beziehungsweise in die Schlackenschicht eingebracht. Darüber hinaus wird feinteiliger Kohlenstoffträger zur Ausbildung einer Schaumschlackeschicht auf der Metallschmelze in die zwischen der Schlackenschicht und der Metallschmelze bestehende Grenzschicht eingeblasen, die im wesentlichen die Komponenten Eisenoxid, Calciumoxid, Siliciumdioxid, Aluminiumoxid und Magnesiumdioxid enthält. Durch die Schaumschlackeschicht werden die Graphitelektroden beziehungsweise der Lichtbogen und die Ofenwand derart eingehüllt, daß eine direkte Wärmestrahlung an die Ofenwände und an den Ofendeckel weitgehend vermieden wird. Es muß ein geeigneter Anteil an Kohlenstoff- und Sauerstoffträger vorhanden sein, um durch CO/CO₂-Bläschenbildung die Schlacke aufzuschäumen. Der hohe Anteil an Gasbläschen in der Schlacke vermindert auch eine direkte Wärmeleitung in der Schaumschlackeschicht selbst. Die in die Schaumschlackeschicht eingetauchten Graphitelektroden beziehungsweise die zwischen der Metallschmelze und den Graphitelektroden brennenden Lichtbögen sind durch die Schaumschlackeschicht gegen den freien Sauerstoffzutritt der Atmosphäre weitgehend geschützt, so daß die Verbrennungsgeschwindigkeit reduziert und die Lebensdauer des Lichtbogenofens erhöht wird. Zusätzlich werden manchmal die Graphitelektroden noch mit Wasser berieselt, um die Wärmebelastung und dadurch die Verbrennungsgeschwindigkeit zu verringern.

Die Erzeugung einer Schaumschlackeschicht zur Abdeckung von Lichtbögen in Lichtbogenöfen ist in DE-Z.: Stahl und Eisen, 106 (1986), Nr. 11, S. 625 bis 630, beschrieben.

Um die Vorteile eines von Schaumschlacke umhüllten Lichtbogens über eine große Zeitspanne mit möglichst geringem Aufwand sicherzustellen, wird gemäß EP-A-0 637 634 an einer Ofencharge mehrmals eine Pegelmessung der Schichthöhe der Schlackenschicht durchgeführt und durch Ein- und/oder Aufblasen von Feststoffen, Gasen oder eines Gemisches von Feststoffen und Gasen in und/oder auf die Schlacke oder die Metallschmelze eine einen von mindestens einer Elektrode gebildeten Lichtbogen einhüllende Schaumschlackeschicht gebildet, deren Schichthöhe so bemessen ist ,daß sich die Schaumschlackeschicht mindestens über den gesamten Lichtbogen erstreckt.

Bekannt ist auch ein Verfahren bzw. eine Einrichtung zur Steuerung der Schaumschlackenbildung in einem Lichtbogenofen, dem Kohlenstoff derart zugeführt wird, daß sowohl eine mindestens teilweise Einhüllung des Lichtbogens im Lichtbogenofen erfolgt als auch eine überdosierte Zufuhr von Kohlenstoff vermieden wird. Die Menge des Kohlenstoffs, der dem Lichtbogenofen zugeführt wird, wird dabei mittels eines Schaumschlackemodells in Abhängigkeit der Menge zu mindestens einem der Beschickungsmaterialien Schrott, Stahl, Legierungsmittel oder Zusatzstoffe ermittelt (DE-C-197 48 310).

Es ist die Aufgabe der vorliegenden Erfindung, das eingangs angeführte Verfahren so auszugestalten, daß die Schutzfunktion der Schaumschlackenschicht verbessert wird.

Die Lösung dieser Aufgabe besteht darin, daß in dem Lichtbogenofen feinteiliger Titanträger, vorzugsweise mit einer mittleren Teilchengröße d₅₀ von 0,001 bis zu 1,0 mm und einer Körnung von bis zu 5.0 mm, eingeblasen wird.

Für den Einsatz kommen sowohl natürliche als auch synthetische Titanträger in Betracht. Natürliche Titanträger haben jedoch gegenüber synthetischen Titanträgern den Nachteil, daß nur relativ grobkörnige Teilchen von bis zu 100 mm zur Verfügung stehen. Aufgrund ihrer spezifischen Eigenschaften wirken natürliche Titanträger sehr abrasiv auf das Fördersystem und die Einblasanlage, so daß das Einblasen natürlicher Titanträger zu häufigen Betriebsstillständen und in der Folge davon zu hohen Reparaturaufwendungen führt. Darüber hinaus können bei natürlichen Titanträgern die chemischen und physikalischen Stoffparameter stark variieren, so daß sie bei der Herstellung von Stahl mit hohen Güteanforderungen nicht oder nur mit großen Risiken einsetzbar sind.

Aufgrund der größeren Feinheit der Teilchen synthetischer Titanträger ergeben sich nicht nur Vorteile hinsichtlich eines zu vernachlässigenden Verschleißes an der Einblaseinrichtung, sondern auch dadurch, daß aufgrund der größeren spezifischen Oberfläche der vergleichsweise feineren Teilchen des synthetischen Titanträgers der Ablauf der gewünschten Reaktionen kinetisch beschleunigt wird.

Die eingebrachten synthetischen Titanträger können aus reinem Titandioxid bestehen, dessen Teilchen eine mittlere Teilchengröße bei 100 % von bis zu 200 µm aufweisen.

Eine vorzugsweise Ausgestaltung des erfindungsgemäßen Verfahrens besteht im Einsatz von synthetischem Titanträger, der neben Titandioxid noch bis zu 95 Gew.-%, vorzugsweise 20 bis 80 Gew.-%, Eisenoxide wie Fe₂O₃, FeO₂, Fe₃O₄ enthält.

Der Titanträger kann noch eine oder mehrere der Komponenten Calciumoxid, Siliciumoxid, Aluminiumoxid und Magnesiumoxid enthalten.

Aufgrund der Teilchenfeinheit und hohen spezifischen Oberfläche schmilzt der in dem Lichtbogenofen eingeblasene eisenoxidhaltige Titanträger sofort auf. In Verbindung mit der gleichzeitig eingeblasenen Kohle wird sowohl das Eisenoxid als auch das Titandioxid sofort zu elementarem Eisen und Titan reduziert. Das reduzierte Titan löst sich in den metallischen Eisentröpfchen auf und reagiert unmittelbar danach mit dem im Überschuß vorhandenen und ebenfalls in den feinen Eisentröpfchen gelösten Kohlenstoff zu Titancarbid. Aufgrund der extrem hohen Temperaturen von bis zu 3000°C eines Lichtbogens ist der Gehalt an Stickstoff in der Atmosphäre und somit auch in der flüssigen Schlackenschicht und Metallschmelze oftmals angereichert. Im Falle, daß die feinen, aufgeschmolzenen und mit Titan angereicherten Eisentröpfchen in Kontakt mit der mit Stickstoff angereicherten Schlacke und Metallschmelze kommen, bildet sich Titannitrid und Titancarbonitrid, die ebenso wie Titancarbid extrem hochfeuerfest und resistent gegen den Angriff von Sauerstoff sind und einen sehr hohen Widerstand gegen physikalische Erosion und chemische Korrosion aufweisen.

Die Bildung dieser Titanverbindungen ist eine reine Phasengrenzreaktion und spielt sich vorzugsweise an der Oberfläche der Eisentröpfchen ab. Hierdurch wird auf der Tröpfchenoberfläche eine dichte Schicht aus diesen Titanverbindungen gebildet. Diese Titanverbindungen lagern sich sofort während des Aufschäumens der Schlacke an den Kontaktflächen, d. h. der Ofenausmauerung und/oder den Graphitelektroden an. Die nunmehr von diesen Titanverbindungen befreiten Eisentröpfchen sinken langsam aufgrund ihres höheren spezifischen Gewichts in die Stahlschmelze ab.

Die einmal an der Oberfläche der Ofenausmauerung und/oder der Graphitelektroden abgelagerten Reinkristalle wachsen immer mehr zu komplexen verschleißfesten Titanverbindungen zusammen und bilden eine dauerhafte, gegen Korrosion und Erosion resistente Schicht; auch dann, wenn die aufgeschäumte Schlacke zusammenbricht und die zu schützende Oberfläche wieder freigibt. Aufgrund der großen Kornfeinheit können die gebildeten Titanverbindungen durch die makroskopischen Transportvorgänge in die porösen Oberflächen der Ofenausmauerung und/oder der Graphitelektroden eingetragen werden und diffundieren teilweise auch in die winzigen Poren hinein. Der optimale Verschluß der Mikroporen verhindert ein weiteres Eindringen von Schlacke und Gasen und schützt somit bis tief in die Ofenausmauerung und/oder Graphitelektroden hinein.

Die mit der Erfindung erzielten Vorteile sind insbesondere darin zu sehen, daß sich die feinteiligen Titanträger allein oder im Gemisch mit Kohlenstoffträgern problemlos in den Lichtbogenofen einbringen lassen und infolge ihrer großen spezifischen Oberfläche eine sehr schnelle Reaktionskinetik hervorrufen. Der Gehalt des Titanträgers beträgt, bezogen auf den Kohlenstoffgehalt, 1 bis 80 %. Es entstehen in kurzer Zeit hochfeuerfeste, korrosions- und erosionsfeste Titancarbide, Titannitride und Titancarbonitride, die sich auf der Oberfläche der Ofenausmauerung und der Graphitelektroden anlagern und teilweise bis in die groben inneren Poren diffundieren; es entsteht eine Schicht aus zusammengewachsenen Kristallen aus unterschiedlichen Titanverbindungen, die einen dauerhaften Schutz auch nach dem Zusammenfall der aufgeschäumten Schlackeschicht gewährleistet.

Vorteilhaft ist auch, daß sich bei Bedarf die Titanträger lokal im Bereich eines zu reparierenden Schadens einblasen lassen.

## Patentansprüche

1. Verfahren zur Herstellung von Schaumschlacke in einem Lichtbogenofen durch dosiertes Einblasen eines Kohlenstoffträgers mittels eines Sauerstoffträgers in die zwischen der Schlackenschicht und der Metallschmelze bestehende Grenzschicht und/oder in die an die Grenzschicht angrenzenden Zonen der Schlackenschicht und/oder-Metallschmelze in einer Menge, daß wenigstens teilweise die Lichtbögen durch Schaumschlackeschicht eingehüllt sind, **dadurch gekennzeichnet, daß** feinteiliger Titanträger, der eine mittlere Teilchengröße d₅₀ von 0,001 bis zu 1,0 mm und eine Körnung von bis zu 5 mm besitzt, eingeblasen wird, wobei der Titanträger im Gemisch mit dem Kohlenstoffträger eingebracht wird und der Gehalt des Titanträgers, bezogen auf den Kohlenstoffgehalt, 1 bis 80 % beträgt.

2. Verfahren nach Anspruch 1, dadurch gekennzeichntet, daß der Titanträger einen Gehalt an Titandioxid von 5 bis 100 %, vorzugsweise von 20 bis 80 % besitzt.

3. Verfahren nach Anspruch 1 oder 2, **dadurch gekennzeichnet, daß** der Titanträger einen Gehalt an Eisenoxid von bis zu 95 Gew.-%, vorzugsweise 20 bis 80 Gew.-% besitzt.

4. Verfahren nach einem oder mehreren der Ansprüche 1 bis 3, **dadurch gekennzeichnet, daß** der Titanträger eine oder mehrere der Komponenten Calciumoxid, Siliciumoxid, Aluminiumoxid und Magnesiumoxid enthält.

## Claims

1. Method of producing foamed slag in an arc furnace by the metered blowing of a carbon carrier by means of an oxygen carrier into the boundary layer between the slag layer and the molten metal and/or into the zones of the slag layer and/or of the molten metal that are adjacent to the boundary layer, in an amount such that the arcs are enveloped at least partially by foamed slag layer, which method is **characterised in that** finely divided titanium carrier having a mean particle size d₅₀ of from 0.001 to 1.0 mm and a grain size of up to 5 mm is blown in, the titanium carrier being introduced in admixture with the carbon carrier and the content of titanium carrier, based on the carbon content, being from 1 to 80 %.

2. Method according to claim 1, **characterised in that** the titanium carrier has a content of titanium dioxide of from 5 to 100 %, preferably from 20 to 80 %.

3. Method according to claim 1 or 2, **characterised in that** the titanium carrier has a content of iron oxide of up to 95 wt.%, preferably from 20 to 80 wt.%.

4. Method according to one or more of claims 1 to 3, **characterised in that** the titanium carrier contains one or more of the components calcium oxide, silicon oxide, aluminium oxide and magnesium oxide.

## Revendications

1. Procédé de préparation de laitier expansé dans un four à arcs par insufflation contrôlée d'un composant de carbone au moyen d'un composant d'oxygène au niveau de l'interface séparant la couche de laitier de la fonte métallique et/ou au niveau des zones voisines de cette interface la couche de laitier de la fonte métallique, en une quantité telle qu'au moins une partie des arcs sont entourés par la couche de laitier expansé, **caractérisé par le fait que** l'on insuffle un composant de titane sous forme de fines particules ayant une taille moyenne d₅₀ comprise entre 0,001 et 1,0 mm et une granulométrie pouvant aller jusqu'à 5 mm, le composant de titane étant introduit sous forme de mélange avec le composant de carbone et la concentration du composant de titane, rapportée à la quantité de carbone, étant comprise entre 1 et 80 %.

2. Procédé selon la revendication 1, **caractérisé par le fait que** le composant de titane a une teneur en dioxyde de titane comprise entre 5 et 100 %, de préférence entre 20 et 80 %.

3. Procédé selon la revendication 1 ou 2, **caractérisé par le fait que** le composant de titane a une teneur en oxyde de fer pouvant atteindre 95 % en poids, et de préférence comprise entre 20 et 80 % en poids.

4. Procédé selon une ou plusieurs des revendications 1 à 3, **caractérisé par le fait que** le support de titane contient un ou plusieurs des composants choisis parmi l'oxyde de calcium, l'oxyde de silicium, l'oxyde d'aluminium et l'oxyde de magnésium.
